# EUROPEAN PATENT APPLICATION

(11) **EP 0 878 367 A2**
(43) Date of publication of application: **18.11.1998**
(21) Application number: 98108911.3
(22) Date of filing: 15.05.1998
(51) Int. Cl.: B60T 8/00

(54) **Braking control system for a motor vehicle**

(30) Priority: 16.05.1997 JP 127413/97
(71) Applicant: TOYOTA JIDOSHA KABUSHIKI KAISHA, Aichi-ken 471-8571 (JP)
(72) Inventor: Aizawa, Hideyuki, Toyota-shi, Aichi-ken 471-8571 (JP)
(74) Representative: Winter, Brandl, Fürniss, Hübner, Röss, Kaiser, Polte, Kindermann Partnerschaft

(57) **Abstract**

A braking control system for a motor vehicle in which a wheel of the maximum one of wheel speeds obtained from wheel speed sensors B1 ∼ B4 is determined as a reference wheel by reference wheel determination device A. When a device D has detected the great difference between the friction coefficients µ of the right and left sides of a road surface, the braking control aspect of a wheel other than the reference wheel, the other wheel lying on the side which exhibits the same friction coefficient as that of the reference wheel, is detected by braking control-aspect detection device E, and the braking force of the reference wheel is controlled on the basis of the braking control aspect of the other wheel by braking control device C. Thus, the stability of the motor vehicle is enhanced on the road surface exhibiting the different friction coefficients µ on the right and left sides thereof.

## Description

The present invention relates to a braking control system for a motor vehicle. more particularly, it relates to a braking control system which enhances the stability of a motor vehicle on a road surface exhibiting different friction coefficients for the right and left sides of the motor vehicle.

There have heretofore been known vehicular braking control systems in each of which the wheel of the maximum wheel speed among wheel speeds obtained from wheel speed sensors mounted on respective wheels, is set as a reference wheel for a braking control so as to estimate a vehicle speed from the maximum wheel speed, whereupon the braking forces of the individual wheels are controlled on the basis of the estimative vehicle speed and the respective wheel speeds.

In the antilock brake system control (ABS control) of this type, the braking forces of the right and left rear wheels have hitherto been controlled independently of each other.

By way of example, the official gazette of Japanese Patent Application Laid-open No. 251727/1995 discloses a brake system of diagonal dual-system type wherein the braking forces of the respective wheels are controlled independently with one another in compliance with requests for the increases or decreases of the brake pressures of the wheels.

In general, during a braking operation, none of the four wheels of a motor vehicle is driven, and the maximum one of the wheel speeds of the four wheels is considered to be nearest to the speed of the vehicle. As stated above, accordingly, the wheel of the maximum wheel speed is set as the reference wheel for the braking control, and the occurrence of a slip is detected by comparing the wheel speed of each of the other wheels with the wheel speed of the reference wheel.

Concretely, since the wheel which is lower in the wheel speed than the reference wheel is considered to have a tendency to lock, the brake pressure thereof is decreased for a smaller braking force so as to eliminate the tendency to lock. As a result, the particular wheel subjected to the pressure decrease rises in the wheel speed. On the other hand, the reference wheel is not subjected to the pressure decrease, so that the wheel speed of the particular wheel becomes higher than that of the reference wheel in due course. Then, the particular wheel is set as a new reference wheel.

In this manner, while the reference wheel is being changed in succession, the four wheels are independently controlled so as not to lock.

It is necessary, however, to cope with a specified road surface which exhibits different friction coefficients for the right and left sides of the motor vehicle. On the specified road surface, usually the wheel speed of the rear wheel on the side of the greater road-surface friction coefficient (on the high-µ side) tends to become the maximum in the four wheels. Because the rear wheel is difficult of slipping owing to the high-µ, and the rear wheels are originally difficult of locking. Therefore, the rear wheel on the high-µ side is easy of becoming the reference wheel for the braking control. Accordingly, the prior-art braking control which controls the right and left rear wheels independently of each other has the problem that the rear wheel on the high-µ side is kept fixed as the reference wheel for the braking wheel throughout the run of the vehicle on the specified road surface, and that the rear wheel has its slip not detected (irrespective of the brake pressure increase or decrease) because of being the reference wheel, so it is difficult to be controlled even in the situation requiring the control. Consequently, the braking of the rear wheel on the high-µ side tends to work excessively, resulting in the problem that the driving stability of the vehicle is liable to degrade on account of the unbalance between the braking forces of the right and left rear wheels.

The present invention has been made in view of the problems of the prior art as stated above, and it has for its object to provide a braking control system for a motor vehicle which can enhance the stability of the vehicle on a specified road surface exhibiting different friction coefficients for the right and left sides of the vehicle.

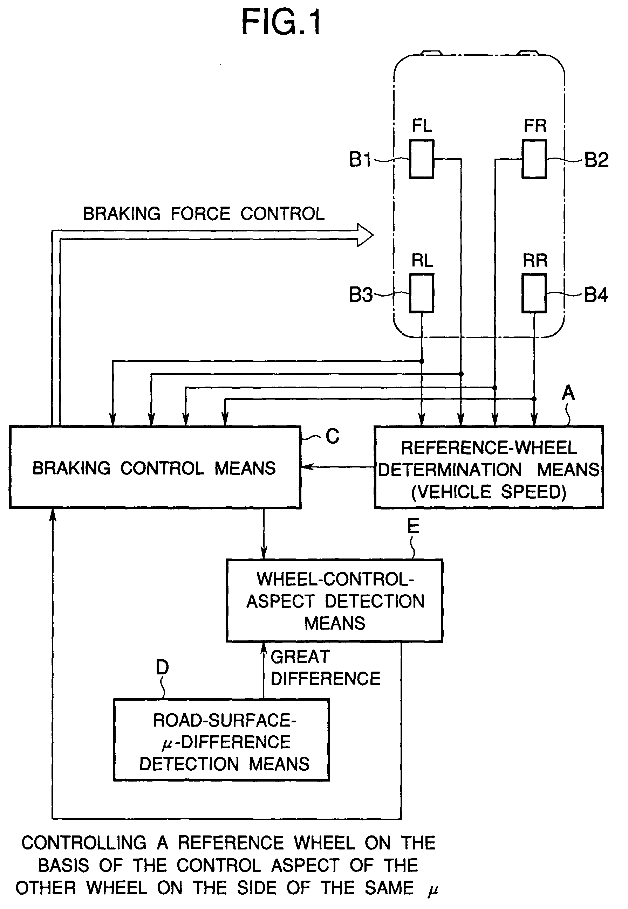

As illustrated in Fig. 1, a braking control system for a motor vehicle according to the present invention is chiefly constructed of means A ∼ E. The reference wheel determination means A receives wheel speeds obtained from wheel speed sensors B1 ∼ B4 mounted on respective wheels FL, FR, RL and RR, determines the wheel of the maximum one of the received wheel speeds as a reference wheel for a braking control and estimates a vehicle speed from the maximum wheel speed. The braking control means C controls the braking forces of the wheels FL, FR, RL and RR primarily on the basis of the vehicle speed and the wheel speeds. The means D detects whether or not the friction coefficients µ of a road surface are greatly different for the right and left wheels. The means E detects the braking control aspect (or condition) of the wheel other than the reference wheel, on the same side of the vehicle as that of the reference wheel (on the same side of the road surface exhibiting the friction coefficient µ of the reference wheel).

In the present invention, in the case of the detection that the road-surface friction coefficients greatly differ for the right and left wheels, the road surface is judged to be one exhibiting different friction coefficients for the right and left sides of the motor vehicle, and the braking force of the reference wheel is controlled on the basis of the control aspect of the wheel other than the reference wheel, the other wheel lying on the side exhibiting the same road surface friction coefficient as that of the reference wheel. As a result, the reference wheel can also be subjected to the braking control corresponding to the road surface condition.

A preferable aspect of performance consists in that the control of the reference wheel based on the control aspect of the other wheel is executed only when the brake pressure of the other wheel is being decreased.

Thus, in the case where the pressure decrease is necessary for the reference wheel, it can be reliably performed, and moreover, the versatility of the control is heightened concerning that pressure hold or pressure increase for the rear wheel (reference wheel) at which the drawbacks to be eliminated by the present invention do not take place. It is accordingly permitted to enhance the braking capability of the control system and the stability of the motor vehicle still more.

The above and other objects, features and advantages of the present invention will become more apparent from the following description of the invention taken in conjunction with the accompanying drawings, wherein like reference characters designate the same or similar parts, and wherein:
Fig. 1 is a block diagram showing the purport of the present invention;
Fig. 2 is a hydraulic circuit diagram showing the outline of a braking control system for a motor vehicle to which the present invention is applied;
Fig. 3 is a table showing modes which are realizable in the aspect of performance exemplified in Fig. 2;
Fig. 4 is a flow chart showing the main routine of a control in the exemplified aspect of performance;
Fig. 5 is a flow chart showing a control calculation process in the exemplified aspect of performance;
Fig. 6 is a flow chart showing a routine in the case where a specified road surface exhibiting different friction coefficients for the right and left sides of the vehicle has been decided in the exemplified aspect of performance;
Fig. 7 is a flow chart showing a mode output process in the exemplified aspect of performance; and
Figs. 8A and 8B are plan views each showing a braking control in the exemplified aspect of performance.

Now, one aspect of performance of the present invention will be described in detail with reference to the drawings.

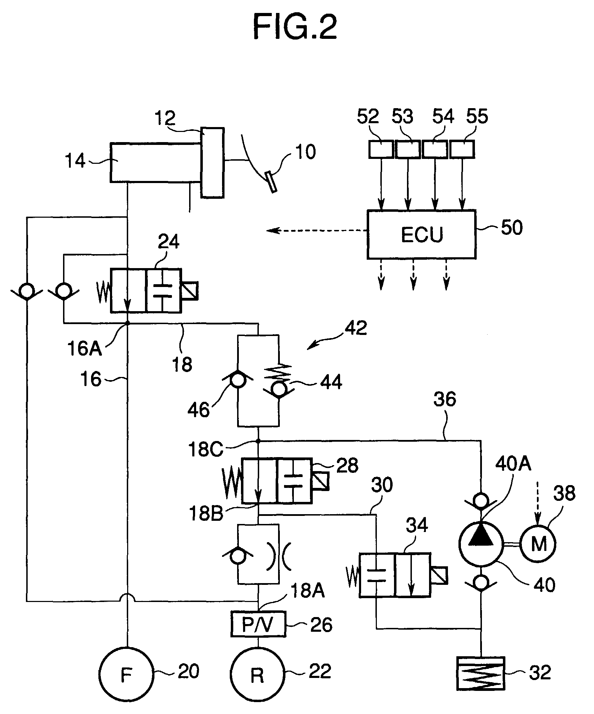

Fig. 2 is a hydraulic circuit diagram showing the outline of a braking control system for a motor vehicle to which the present invention is applied. The example illustrated in Fig. 2 is an antilock brake system of diagonal dual-system type (in Fig. 2, however, only one of the two systems thereof is depicted, and the other system is omitted).

Referring to Fig. 2, numeral 10 designates a brake pedal, and numeral 12 designates a booster which amplifies a tread force on the brake pedal 10. Numeral 14 designates a master cylinder to which the amplified tread force is transmitted so as to generate a hydraulic pressure. The hydraulic pressure generated in the master cylinder 14 is transmitted to the wheel cylinder 20 of a front wheel through the brake passage 16 thereof, and to the wheel cylinder 22 of a rear wheel through the brake passage 18 thereof.

A first switchover valve (master cutoff valve) 24 being normally open is incorporated in that part of the front-wheel brake passage 16, which is near to the master cylinder 14 with respect to the node or connection position 16A of the rear-wheel brake passage 18. During a braking control (during an ABS control in the exemplified aspect of performance), the first switchover valve 24 is closed to cut off the communications between the master cylinder 14 and the wheel cylinders 20, 22 of the front and rear wheels. Besides, a P valve (proportioning valve) 26 is incorporated in the rear-wheel brake passage 18.

A second switchover valve 28 being normally open is incorporated in that part of the rear-wheel brake passage 18, which is near to the master cylinder 14 with respect to the node 18A of the P valve 26. Besides, a reservoir passage 30 is connected to that part of the rear wheel brake passage 18, which lies between the node 18B of the second switchover valve 28 and that 18A of the P valve 26. The reservoir passage 30 is extended from a reservoir 32, and a third switchover valve 34 being normally closed is mounted midway of this passage 30.

A pump passage 36 midway of which a pump 40 is mounted is also extended from the reservoir 32. The pump 40 is driven by an electric motor 38, and it draws a brake fluid from the reservoir 32. The port 40A of the pump 40 for discharging the brake fluid is connected to that position 18C of the rear-wheel brake passage 18, which is near to the master cylinder 14 with respect to the node 18B of the second switchover valve 28.

A check valve assembly 42 is incorporated in that part of the rear wheel brake passage 18, which is near to the master cylinder 14 with respect to the node 18C of the pump passage 36. The check valve assembly 42 is so constructed that a first check valve 44 the opening pressure of which is not substantially zero, and a second check valve 46 the opening pressure of which is substantially zero, are connected in senses reverse to each other and in parallel with each other.

An electronic control unit (ECU) 50 is mainly constructed of a computer etc. which include a CPU, a ROM, a RAM and a bus. The ECU 50 controls the open and closed states of the switchover valves 24, 28 and 34. In addition, the ECU 50 is connected with wheel speed sensors 52, 53 and 54, 55 which detect the wheel speeds of right and left front wheels FR, FL and those of right and left rear wheels RR, RL, respectively. Thus, the ECU 50 functions as automatic braking control means for controlling the switchover valves 24, 28 and 34 on the basis of signals delivered from the sensors 52 ∼ 55.

More specifically, the ECU 50 compares the pressure decreasing time periods of the wheel cylinders 20 and 22 of the wheels FR, FL and RR, RL, thereby to indirectly detect whether or not the friction coefficients µ of a road surface are greatly different for the right and left wheels (road-surface-µ-difference detection means). Further, the ECU 50 grasps the control aspect (the pattern of a pressure increase, a pressure decrease or a pressure hold) of each wheel at all times (as control-aspect detection means), and outputs a signal for controlling the braking force of each wheel (as braking-force control means).

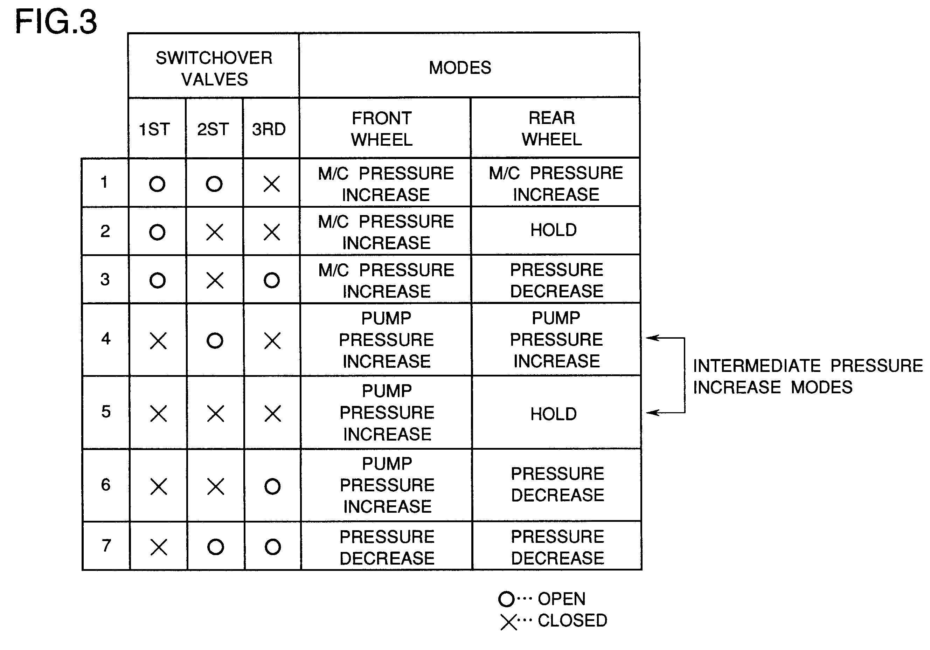

Modes which can be realized by combining the open and closed states of the switchover valves 24, 28 and 34, are of seven sorts as tabulated in Fig. 3.

Referring to Fig. 3, marks ○ and X denote the open state and closed state of the first switchover valve 24, second switchover valve 28 or third switchover valve 34, respectively. An expression "M/C pressure increase" signifies an ordinary pressure increase in which a pressure is increased with the master cylinder 14 as an oil pressure source when the brake pedal 10 has been trodden. On the other hand, an expression "pump pressure increase" signifies a pressure increase in which a pressure is increased with the pump 40 and reservoir 32 as an oil pressure source during the braking control.

As stated before, the brake system in this aspect of performance is of the diagonal dual-system type. When the occurrence of a tendency to lock has been decided for at least either of the front wheel and rear wheel in each of the two diagonal systems of the brake system (for the right front wheel and left rear wheel by way of example), this brake system determines which of a pressure decrease request, a pressure holding request and a pressure increase request is to be issued, every wheel on the basis of the rotating situation thereof. That is, among the seven sorts of modes indicated in Fig. 3, ones matching with the hydraulic pressure control requests which have been respectively determined for the front wheel and rear wheel are determined and executed as the modes of the current control cycle.

The individual modes will be explained below.

In a case where the tendency to lock has firstly occurred in the front wheel (usually the front wheel locks), the seventh mode is selected for decreasing the brake pressure of the rear wheel besides that of the front wheel. Here, in a case where the tendency of the front wheel to lock has come to disappear in consequence of the decrease of the front-wheel brake pressure, any of the fourth ∼ seventh modes is selected in accordance with the subsequent tendencies of the front and rear wheels to lock.

On the other hand, in a case where the tendency to lock has firstly occurred in the rear wheel, only the rear-wheel brake pressure may be decreased. Therefore, the third mode is firstly executed, whereupon a selected one of the first ∼ seventh modes is executed.

The first mode is an ordinary M/C pressure increase mode in which the first switchover valve 24 is opened to supply the brake fluid from the master cylinder 14 to the wheel cylinder 20 of the front wheel and that 22 of the rear wheel. The second and third modes are ones in which the wheel cylinder 20 of the front wheel is similarly subjected to the ordinary m/C pressure increase owing to the brake fluid of the master cylinder 14 by opening the first switchover valve 24, while the brake pressures of the rear wheel are respectively held and decreased. During the braking control of the front wheel, only the fourth ∼ seventh modes are executed, and the first ∼ third modes are not executed.

In the fourth mode, both the first switchover valve 24 and the third switchover valve 34 are closed, and only the second switchover valve 28 is opened. Accordingly, the brake fluid discharged from the pump 40 is supplied to the wheel cylinder 20 of the front wheel via the first check valve 44, and the front-wheel brake pressure is increased. On the other hand, the brake fluid is also supplied to the wheel cylinder 22 of the rear wheel via the second switchover valve 28 as well as the P valve 26, with the result that the rear-wheel brake pressure is also increased. That is, the fourth mode implements the pump pressure increases for both the wheels.

In the fifth mode, all of the first, second and third switchover valves 24, 28 and 34 are closed. Therefore, the brake fluid discharged from the pump 40 is not supplied to the wheel cylinder 22 of the rear wheel, and is supplied only to the wheel cylinder 20 of the front wheel via the first check valve 44. That is, the fifth mode implements the pump pressure increase for the front wheel and the pressure holding for the rear wheel.

In the sixth mode, the first and second switchover valves 24 and 28 are closed, and only the third switchover valve 34 is opened. Therefore, the brake fluid discharged from the pump 40 is supplied to the wheel cylinder 20 of the front wheel, while the brake fluid of the wheel cylinder 22 of the rear wheel flows back to the reservoir 32 via the third switchover valve 34. That is, the sixth mode implements the pump pressure increase for the front wheel and the pressure decrease for the rear wheel.

In the seventh mode, the first switchover valve 24 is closed, and the second and third switchover valves 28, 34 are open. Therefore, both the wheel cylinders 20 and 22 of the front and rear wheels communicate with the reservoir 32, and the brake fluid returns into the reservoir 32. That is, the seventh mode implements the pressure decreases for both the front and rear wheels as explained before.

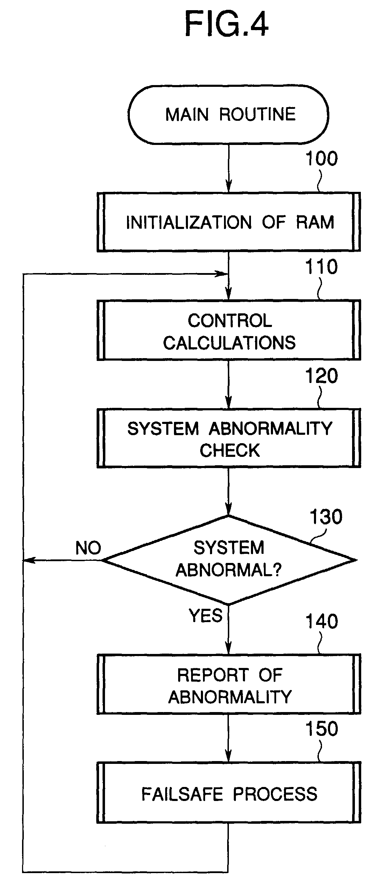

Now, the operation of this aspect of performance will be described in conjunction with the flow charts of Figs. 4 ∼ 7.

The flow chart of Fig. 4 illustrates the main routine of a control according to this aspect of performance.

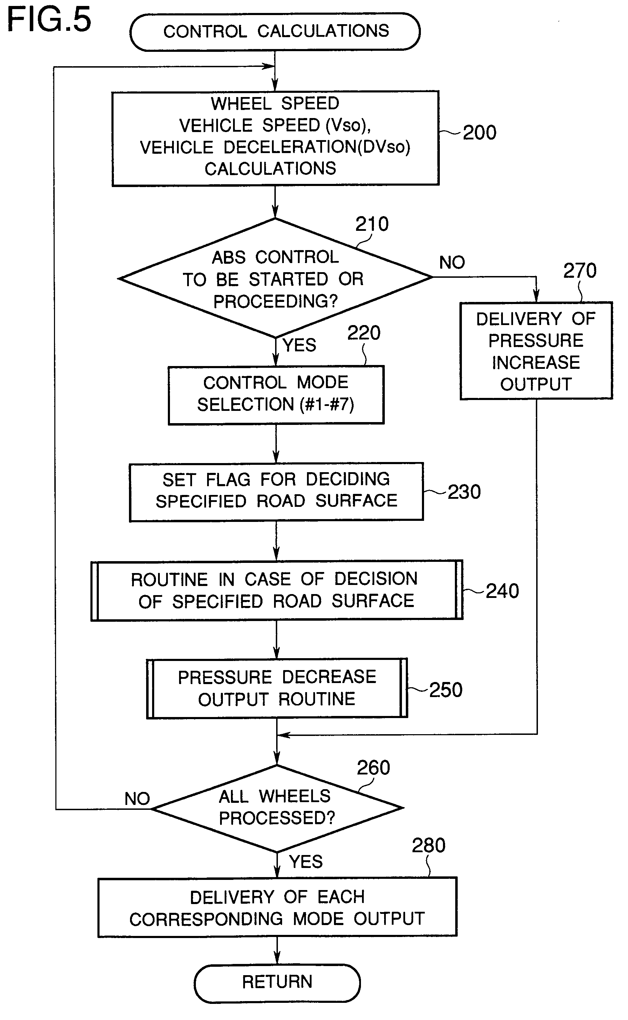

At a step 100 in Fig. 4, the RAM included in the ECU 50 is initialized, and flags are reset. At the next step 110, a process for control calculations is executed. The contents of the control calculation process will be explained later by reference to the flow chart of Fig. 5. A system abnormality check is carried out at a step 120. On condition that the system has been judged abnormal at a step 130, the abnormality is reported at the next step 140, and a failsafe process is executed at a step 150.

Next, there will be explained the control calculation process.

At a step 200 in Fig. 5, the vehicle speed VS0 is estimated from the maximum wheel speed on the basis of signals delivered from the wheel speed sensors 52, 53, 54 and 55. Further, the incremental rate DVS0 of the vehicle speed VS0 is calculated.

A step 210 serves to judge if the braking control (ABS control) is to be started or is proceeding. On condition that the braking control is neither to be started nor proceeding, the flow of the process advances to a step 270 at which the ordinary brake control based on the pressure increase from the master cylinder 14 is executed, and which is followed by a step 260.

On condition that the braking control is to be started or is proceeding, the pressure increase or decrease control pattern is selected every wheel at the next step 220. The step 220 is followed by a step 230 at which the flag for deciding the specified road surface is set. As stated before, the specified road surface exhibits different friction coefficients (road-surface-µ) for the right and left wheels.

Here, a method for deciding (or judging) the specified road surface is, for example, one in which the pressure decreasing time periods of the right and left rear wheels are compared, thereby to indirectly compare the road-surface friction coefficients µ. In a case where the road-surface friction coefficient µ is low, a reaction force from the road surface cannot be sufficiently received. Therefore, even when the brake pressure of the wheel is decreased, the wheel speed thereof is not restored so quickly as on the high µ side, and a longer time period is expended on the pressure decrease accordingly. On this ground, the wheel which is longer in the pressure decreasing time period is judged as lying on the low m side. Further, in a case where the difference between the pressure decreasing time periods of the right and left rear wheels is equal to or less than a predetermined value, it is recognized that the difference between the friction coefficients of the right and left sides of the road surface is great, and the specified road surface is decided. Then, the specified-road-surface decision flag is turned ON. In a case where the specified road surface is not decided, the specified-road-surface decision flag is turned OFF.

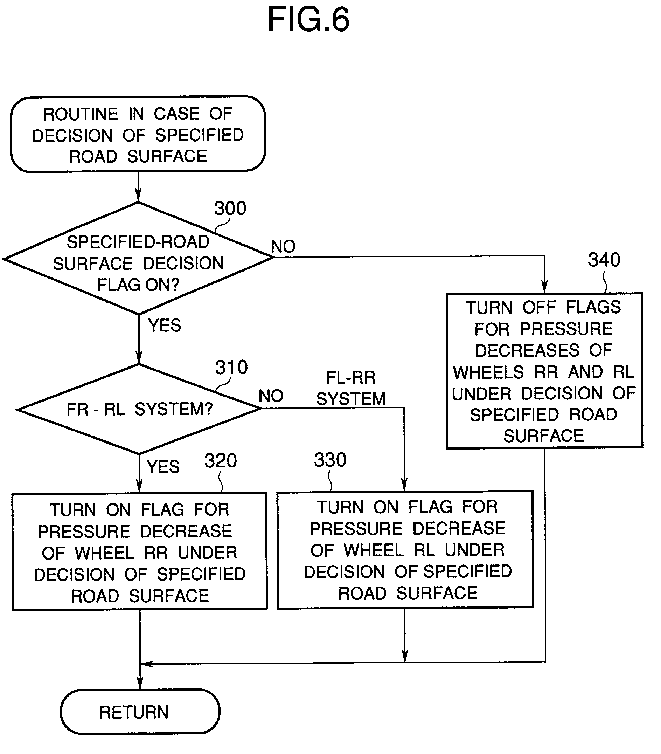

Subsequently, a routine in the case of the decision of the specified road surface, to be explained later by reference to Fig. 6, is executed at a step 240. At the next step 250, the output of a pressure decrease (corrected for the specified road surface) is delivered. Whether or not all the wheels have been processed, is checked at a step 260. On condition that all the wheels have been processed, the next step 280 serves to output the control modes matching with the pressure increase and/or decrease patterns of the respective wheels.

The flow chart of Fig. 6 illustrates the routine in the case of the decision of the specified road surface.

At a step 300 in Fig. 6, it is checked whether or not the specified-road-surface decision flag is ON. The check serves to judge whether or not the specified road surface has been decided at the step 230 in Fig. 5.

On condition that the specified road surface has not been decided (i. e., that the specified-road-surface decision flag is OFF), the control flow of the routine advances to a step 340, at which the flag for the pressure decrease control of the right rear wheel RR under the decision of the specified road surface and the flag for the pressure decrease control of the left rear wheel RL under the decision of the specified road surface are both turned OFF.

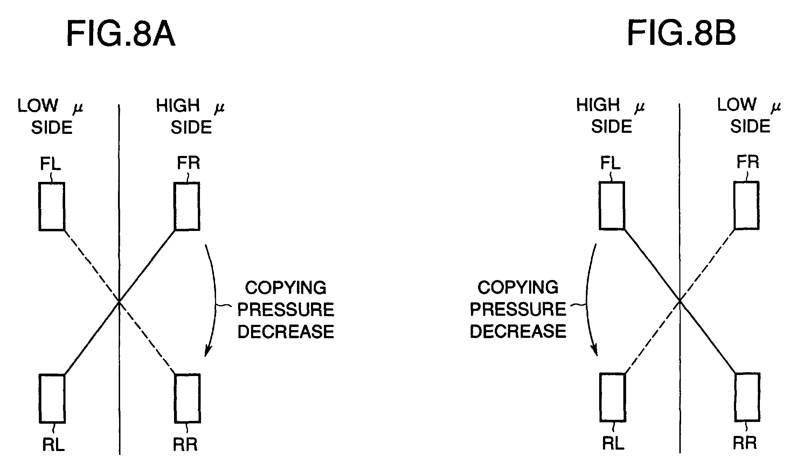

In contrast, on condition that the specified road surface has been decided (i. e., that the specified-road-surface decision flag is ON), that system of the dual-system type in which the rear wheel corresponds to the low m side is judged at the next step 310. more specifically, it is judged if the pertinent system is the FR - RL system as shown in Fig. 8A by way of example (i. e., if the left rear wheel RL lies on the low µ side of the specified road surface).

In a case where the left rear wheel RL lies on the low m side as the result of the judgment, the right rear wheel RR ought to lie on the high µ side, and this wheel RR ought to be a reference wheel for the braking control. At the next step 320, therefore, the flag for the pressure decrease control of the right rear wheel RR under the decision of the specified road surface is turned ON in order to decrease the brake pressure of the right rear wheel RR lying on the high µ side.

On the other hand, in a case where the pertinent system is not the FR - RL system, that is, where the right rear wheel RR lies on the low µ side as shown in Fig. 8B, the left rear wheel RL ought to lie on the high µ side, and this wheel RL ought to be the reference wheel. At the next step 330, therefore, the flag for the pressure decrease control of the left rear wheel RL under the decision of the specified road surface is turned ON in order to decrease the brake pressure of the left rear wheel RL lying on the high µ side at this time.

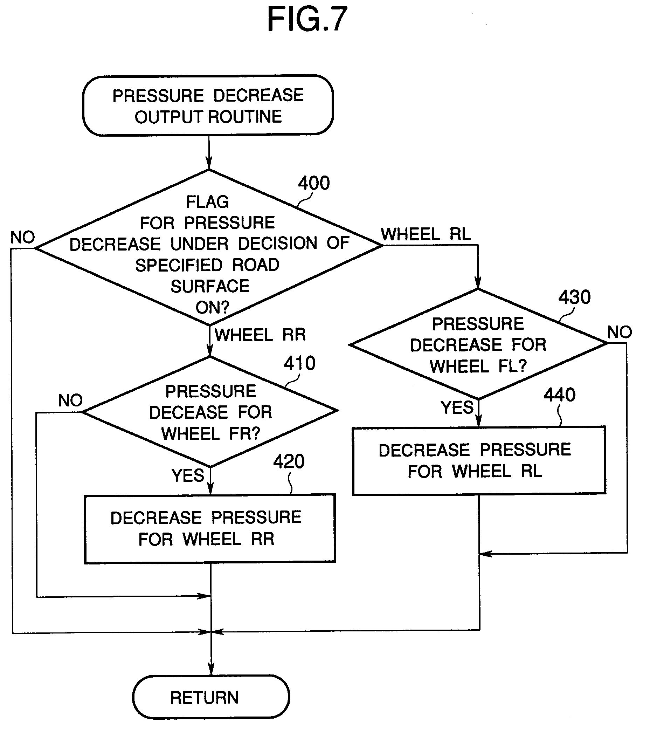

The flow chart of Fig. 7 illustrates a practicable procedure for the process of the pressure decrease output routine at the step 250 in Fig. 5.

At a step 400 in Fig. 7, which of the flags for the pressure decreases control of the right and left rear wheels under the decision of the specified road surface is ON is decided. Herein, in a case where neither of these flags is ON, the routine is immediately exited from.

In a case where the flag for the pressure decrease control of the right rear wheel RR under the decision of the specified road surface is ON, whether or not the front wheel FR on the same right side of the motor vehicle is under the pressure decrease is judged at a step 410. On condition that the right front wheel FR is not under the pressure decrease, the routine is immediately exited from. In contrast, on condition that the right front wheel FR is under the pressure decrease, the next step 420 functions to decrease the brake pressure of the right rear wheel RR with the same pattern as in the pressure decrease output for the right front wheel FR as illustrated in Fig. 8A (i. e., to copy the pressure decrease output). In other words, the brake pressure of the right rear wheel RR is decreased for the same time period as the pressure decreasing time period of the right front wheel FR.

In a case where the flag for the pressure decrease control of the left rear wheel RL under the decision of the specified road surface has been decided ON at the step 400, whether or not the front wheel FL on the same left side of the vehicle is under the pressure decrease is judged at a step 430. On condition that the left front wheel FL is not under the pressure decrease, the routine is immediately exited from. In contrast, on condition that the left front wheel FL is under the pressure decrease, the next step 440 functions to decrease the brake pressure of the left rear wheel RL with the same pattern as in the pressure decrease output for the left front wheel FL as illustrated in Fig. 8B (i. e., to copy the pressure decrease output). In other words, the brake pressure of the left rear wheel RL is decreased for the same time period as the pressure decreasing time period of the left front wheel FL.

As thus far described, according to this aspect of performance, the stability of the motor vehicle can be enhanced in such a way that the hydraulic pressure of the rear wheel on the high µ side which is liable to be fixed as the reference wheel on the specified road surface exhibiting the different friction coefficients and which is difficult to be decreased, is prevented from becoming unnecessarily high.

Incidentally, the present invention is not restricted to the foregoing aspect of performance. It shall cover, not only a case where only the pressure decrease pattern of the front wheel on the high µ side is copied for the rear wheel on this high µ side, with the pressure increase being optional, but also a case where both the pressure decrease and the pressure increase are copied. Also covered is an intermediate control in which the pressure decrease or increase is not completely copied, but a pressure decrease or increase control is executed after the pressure decrease or increase is multiplied by an appropriate coefficient in accordance with the pressure decrease or increase pattern. Such coefficients may well differ between on the pressure increase side and on the pressure decrease side, or depending upon the difference between the road surface friction coefficients on the right and left sides.

As described above, according to the present invention, when it has been detected that the friction coefficients of a road surface for the right and left wheels of a motor vehicle are greatly different, the braking force of a reference wheel for a braking control is controlled on the basis of the control aspect of a wheel other than the reference wheel, the other wheel lying on the side of the road surface exhibiting the same friction coefficient as that of the reference wheel. Thus, the reference wheel can also be subjected to the braking control corresponding to the road surface condition, and the stability of the vehicle can be enhanced.

## Claims

1. A braking control system for a motor vehicle having wheel speed sensors (52 - 55) mounted on respective wheels (FL, FR, RL, RR), wherein a wheel of a maximum one of wheel speeds which are obtained from said wheel speed sensors is set as a reference wheel for a braking control, so as to estimate a vehicle speed (VS0) from the maximum wheel speed of the reference wheel, and to control braking forces of the respective wheels on the basis of the estimated vehicle speed and the wheel speeds,
said braking control system comprising:
means (D) for detecting whether or not friction coefficients µ of a road surface are greatly different for the right and left wheels;
means (E) for detecting a braking control aspect of the wheel other than said reference wheel, the other wheel lying on that side of the road surface which exhibits the same friction coefficient as the friction coefficient of said reference wheel; and
means (C) for controlling the braking force of said reference wheel on the basis of the braking control aspect of said other wheel when the road-surface friction coefficients are greatly different for said right and left wheels.

2. A braking control system for a motor vehicle as defined in Claim 1, wherein the control of said braking force of said reference wheel based on the braking control aspect of said other wheel is executed only when said other wheel is under a pressure decrease.
